# EUROPEAN PATENT APPLICATION

(11) **EP 3 118 538 A1**
(43) Date of publication of application: **18.01.2017**
(21) Application number: 15761261.5
(22) Date of filing: 05.03.2015
(51) Int. Cl.: F24H 9/02, F24H 1/18, F24H 9/00

(54) **HEAT EXCHANGER FOR HOT WATER SUPPLY AND HOT WATER SUPPLY DEVICE COMPRISING SAME**

(30) Priority: 14.03.2014 JP 2014051518
(71) Applicant: Panasonic Intellectual Property Management Co., Ltd., Osaka-shi, Osaka 540-6207 (JP)
(72) Inventor: AOYAMA, Shigeo, Osaka-shi, Osaka 540-6207 (JP); YAMAMOTO, Teruo, Osaka-shi, Osaka 540-6207 (JP); SHIGETA, Akihiro, Osaka-shi, Osaka 540-6207 (JP); MORIWAKI, Shunji, Osaka-shi, Osaka 540-6207 (JP); SHIBATA, Hirofumi, Osaka-shi, Osaka 540-6207 (JP); KANEKO, Hirotaka, Osaka-shi, Osaka 540-6207 (JP)
(74) Representative: Eisenführ Speiser
(86) International application number: PCT/JP2015/001163
(87) International publication number: WO 2015/136891

(57) **Abstract**

A heat exchanger for hot water supply including: a hot water supply heat exchanging device 2; a heating medium path 5; a hot water supply path 6; and a housing 40, wherein the housing 40 is provided therein with: a first port 61 through which the heating medium flows into the heating medium path 5; a second port 62 through which the heating medium flows from the heating medium path 5; a water supply port 71 through which the water flows into the hot water supply path 6; and a hot water supply path 6 through which the water flows from the hot water supply path 6. Therefore, a supply source (tank and the like) of high temperature heating medium and the heat exchanger for hot water supply 1 can be provided as separated members, and installation flexibility can be enhanced.

## Description

### [TECHNICAL FIELD]

The present invention relates to a heat exchanger for hot water supply to supply hot water to a hot water supply terminal, and to a hot water supply device comprising the heat exchanging device.

### [BACKGROUND TECHNIQUE]

Conventionally, as a hot water supply device of this kind, there is one which produces hot water using high temperature heating medium stored in a hot water tank and which supplies the produced hot water (see patent document 1 for example).

This hot water supply device includes a tank for storing high temperature heating medium therein, a hot water supply heating circuit through which high temperature heating medium circulates, a general hot water supply circuit through which water flows from a water supply source to a hot water supply terminal such as a water pipe, and a hot water supply heat exchanging device in which heating medium flowing through the hot water supply heating circuit and water flowing through the general hot water supply circuit exchange heat. The hot water supply heating circuit, the general hot water supply circuit and the hot water supply heat exchanging device are accommodated in a first housing.

The hot water supply heating circuit is provided with a pump for circulating heating medium. The hot water supply device includes a second housing in which a heat pump unit as heating means for heating the heating medium in the tank is accommodated. The tank and the heat pump unit are annularly connected to each other through a heating medium pipe to form a heating circuit. Water supplied from the water supply source is used as the heating medium flowing through the tank, the hot water supply heating circuit and the heating circuit.

According to this configuration, the heating circuit and the hot water supply heating circuit become closed circuits. That is, this hot water supply device is not of a direct heating type in which hot water supplied to the hot water supply terminal is heated directly by the heating means, but is of an indirect heating type in which hot water supplied to the hot water supply terminal is heated by heating medium which is heated by the heating means. Therefore, new water does not flow into the closed circuit except when heating medium is replenished. Hence, hardness component included in heating medium flowing through the tank, the hot water supply heating circuit and the heating circuit is limited to a constant amount.

If water (heating medium) including a large amount of hardness components is heated to high temperature, scale is deposited and accumulated in the pipe, and the pipe becomes clogged. However, as described on or above, hardness component included in heating medium flowing through the tank, the hot water supply heating circuit and the heating circuit is limited to the constant amount. As a result, even in a region where hard water is used, it is possible to realize a hot water supply device which can be used for the long term.

### [PRIOR ART DOCUMENT]

### [PATENT DOCUMENT]

[Patent Document 1] Japanese Patent Application Laid-open No.2012-7802

### [SUMMARY OF THE INVENTION]

### [PROBLEM TO BE SOLVED BY THE INVENTION]

However, according to the conventional configuration, the tank, the hot water supply heating circuit and the general hot water supply circuit are accommodated in one housing. As a result, the housing is increased in size and there is a problem that a place where the housing is installed is limited.

The present invention has been accomplished to solve the conventional problem, and it is an object to the invention to enhance the flexibility of installation of the indirect heating type hot water supply device.

### [MEANS FOR SOLVING THE PROBLEM]

To solve the on or above problem, the present invention provides a heat exchanger for hot water supply including: a hot water supply heat exchanging device in which heating medium and water supplied to a hot water supply terminal exchange heat; a heating medium path which is connected to the hot water supply heat exchanging device and through which the heating medium flows; a hot water supply path which is connected to the hot water supply heat exchanging device and through which water flows from a water supply source to the hot water supply terminal; and a housing in which the hot water supply heat exchanging device, the heating medium path and the hot water supply path are accommodated, wherein the housing is provided therein with: a first port through which the heating medium flows into the heating medium path from outside of the housing; a second port through which the heating medium flows from the heating medium path to outside of the housing; a water supply port through which the water flows into the hot water supply path from outside of the housing; and a hot water supply port through which the water flows from the hot water supply path to outside of the housing.

According to this, means (heating device, tank and the like) which produces or supplies high temperature heating medium and the heat exchanger for hot water supply can be provided as separated members. As a result, flexibility of installation is enhanced.

### [EFFECT OF THE INVENTION]

According to the present invention, means (heating device, tank and the like) which produces or supplies high temperature heating medium and the heat exchanger for hot water supply can be provided as separated members. Hence, the heat exchanger for hot water supply and the means which produces or supplies high temperature heating medium are combined to configure a hot water supply device, and flexibility when the hot water supply device is installed can be enhanced.

### [BRIEF DESCRIPTION OF THE DRAWINGS]

Fig. 1 is a schematic block diagram of a heat exchanger for hot water supply and a hot water supply device according to a first embodiment of the present invention;
Fig. 2 is another schematic block diagram of the heat exchanger for hot water supply and the hot water supply device;
Fig. 3 is a graph showing solubility of calcium carbonate (CaCO₃) ;
Fig. 4 is a perspective view of the hot water supply device;
Fig. 5 is a perspective view showing an interior structure of the heat exchanger for hot water supply;
Fig. 6 is a front view showing the interior structure of the heat exchanger for hot water supply;
Fig. 7 is a plan view showing the interior structure of the heat exchanger for hot water supply; and
Fig. 8 is a schematic block diagram of a heat exchanger for hot water supply and a hot water supply device according to a second embodiment of the present invention.

### [MODE FOR CARRYING OUT THE INVENTION]

A first aspect of the present invention provides a heat exchanger for hot water supply including: a hot water supply heat exchanging device in which heating medium and water supplied to a hot water supply terminal exchange heat; a heating medium path which is connected to the hot water supply heat exchanging device and through which the heating medium flows; a hot water supply path which is connected to the hot water supply heat exchanging device and through which water flows from a water supply source to the hot water supply terminal; and a housing in which the hot water supply heat exchanging device, the heating medium path and the hot water supply path are accommodated, wherein the housing is provided therein with: a first port through which the heating medium flows into the heating medium path from outside of the housing; a second port through which the heating medium flows from the heating medium path to outside of the housing; a water supply port through which the water flows into the hot water supply path from outside of the housing; and a hot water supply port through which the water flows from the hot water supply path to outside of the housing.

According to this, the means (heating device, tank and the like) which produces or supplies high temperature heating medium, and the heat exchanger for hot water supply can be formed as separate members. Hence, if the heat exchanger for hot water supply and the means which produces or supplies high temperature heating medium are combined to configure a hot water supply device, flexibility when the hot water supply device is installed can be enhanced.

The heating medium path may be provided with transfer means through which heating medium flows. The heat exchanger for hot water supply may be provided with a bypass path which connects the hot water supply path and the heating medium path to each other. According to this, when an amount of heating medium flowing through the heating medium path is reduced, water flowing through the hot water supply path may be made to flow into the heating medium path through the bypass path. That is, it becomes easy to replenish heating medium in the heating medium path. When the heating medium path may be provided with a buffer tank. When temperature of heating medium is varied and a volume thereof is increased, heating medium of an amount corresponding to the increased volume flows into the buffer tank.

According to a second aspect of the invention, in the first aspect, the heating medium path is provided with transfer means for sending the heating medium, and the transfer means is placed at a position higher than the first port and the second port.

According to this, since the transfer means is placed on the upstream side of the first port and the second port, heating medium remaining in the transfer means can easily be discharged through the first port and the second port.

It is preferable that the transfer means is provided with a first discharge passage having a first discharge port provided on the downstream side of the transfer means. According to this, heating medium remaining in the transfer means can easily be discharged. It is preferable that a suction port of the transfer means is provided on the downstream side of a discharge port of the transfer means. It is preferable that a heating medium pipe connected to the discharge port of the transfer means is extended upward and then, the heating medium pipe is connected to the second port located on the downstream side of the transfer means. According to this, air which flows into the heating medium path can easily be discharged. Hence, it is possible to prevent air from remaining in the transfer means and prevent the transfer means from being damaged.

In the heating medium path, it is preferable that the first port and the second port are provided on the downstream side of a heating medium inflow portion and a heating medium outflow portion of the hot water supply heat exchanging device. According to this, it is possible to easily discharge heating medium which remains in the hot water supply heat exchanging device.

It is preferable that the heating medium path is provided a second discharge passage connected to a second discharge port provided on the downstream side of the first port, the second port and the transfer means. The second discharge passage branches off from the heating medium pipe. According to this, it becomes easy to discharge heating medium which remains in the heating medium path. Here, it is preferable that the second discharge passage is provided in the heating medium path on a side opposite from a side where the transfer means is provided on a basis of the hot water supply heat exchanging device.

Both of the first discharge passage and the second discharge passage may be provided, or any one of the first discharge passage and the second discharge passage may be provided.

According to a third aspect of the invention, in the first or second aspect, flow rate detecting means is provided in the hot water supply path on an upstream side of the hot water supply heat exchanging device.

According to this, a flow rate of water before it is heated by the hot water supply heat exchanging device can be detected by the flow rate detecting means. Heating circuit in water is prone to be deposited as scale under high temperature environment, but if the flow rate detecting means is placed in the hot water supply path located upstream of the hot water supply heat exchanging device and a flow rate off water before it is heated is detected, it is possible to precisely detect the flow rate of water flowing through the hot water supply path without receiving influence of the scale.

As the flow rate detecting means, it is possible to use a flow sensor which detects whether fluid of a predetermined flow rate flows, and a flow rate sensor which detects a predetermined flow rate.

According to a fourth aspect of the invention, in any one of the first to third aspect, the water supply port and the hot water supply port are placed at positions higher than the first port and the second port.

Since the heat exchanger for hot water supply is provided in the basement such as a boiler chamber in many cases, it is necessary to send water heated by the hot water supply heat exchanging device to the hot water supply terminal located on the ground. Here, since the water supply port and the hot water supply path are provided at locations higher than the first port and the second port, a pipe which connects the hot water supply heat exchanging device and the hot water supply terminal to each other can be shortened. As a result, a pressure loss when water flowing through the pipe can be reduced, and a heat radiation loss from the pipe can be reduced.

On the other hand, the heat exchanger for hot water supply can be placed on or above the tank in which heating medium is stored. At this time, since the first port and the second port which are connected to each other through the tank and the heating medium pipe are provided at lower locations, the heating medium pipe connected to the tank can be shortened. According to this, a pressure loss when heating medium flowing through the pipe can be reduced, and a heat radiation loss from the heating medium pipe can be reduced.

It is more preferable that the water supply port and the hot water supply path are provided on or above the housing because of the on or above-described reason.

According to a fifth aspect of the invention, in any one of the first to fourth aspect, in the hot water supply heat exchanging device, a flowing direction of the heating medium and a flowing direction of the water are opposed to each other.

When heating medium and water flow in parallel, a temperature difference therebetween becomes large on the inlet side of the hot water supply heat exchanging device, and the temperature difference therebetween becomes small on the outlet side of the hot water supply heat exchanging device. On the other hand, if the heat exchanger for hot water supply is configured such that heating medium and water counterflow (opposite flow), it is possible to maintain the temperature difference therebetween at a constant temperature different over the entire region from the inlet side to the outlet side of the hot water supply heat exchanging device. As a result, heat exchanging efficiency between heating medium and water can be enhanced in the hot water supply heat exchanging device.

It is only necessary that the heat exchanger for hot water supply is configured such that heating medium and water counterflow through the hot water supply heat exchanging device in the hot water supply operation in which at least water to be supplied to the hot water supply terminal is heated.

According to a sixth aspect of the invention, in any one of the first to fifth aspect, the hot water supply heat exchanging includes operating means having a function for adjusting temperature of water sent to the hot water supply terminal, and the operating means, the first port and the second port are placed in any one of two regions which are divided by a straight line passing through a center of the housing as viewed from above the housing.

It is preferable that the heat exchanger for hot water supply includes operating means for changing temperature of water heated by the hot water supply heat exchanging device. The heat exchanger for hot water supply includes the first port and the second port so that these ports can be provided as ports which are separate from the tank and the heating means. The heat exchanger for hot water supply and the hot water supply device are placed along a wall surface in many cases. Therefore, it is necessary to appropriately place the first port and the second port in addition to the operating means, and to enhance the flexibility of installation of the hot water supply heat exchanging device and the hot water supply device.

Here, since the first port, the second port and the operating means to which the heating medium pipe is connected are placed in the same region, the operating means, the first port and the second port are exposed in the same direction. As a result, while a connecting operation between the hot water supply heat operating means and the heating medium pipe can be made easy, an operation of the operating means carried out by a user can also be made easy.

It is preferable that the first port and the second port are provided in a side surface of the housing, and the operating means is provided while orienting the side surface of the housing, i.e., while opposing to an inner surface of the housing.

When the water supply port and the hot water supply path are provided in the side surface of the housing, it is preferable that the operating means, the first port, the second port, the water supply port and the hot water supply port are placed in the same region. According to this, both all of the connecting operations between ports and pipes, and the operation of the operating means can be made easy.

It is not preferable that the port and the operating means which are provided in one region are oriented in the same direction as viewed from on or above the housing. That is, it is not preferable that the port and the operating means are placed vertically located.

A seventh aspect of the invention provides a hot water supply device including: the heat exchanger for hot water supply according to any one of the first to sixth aspects; a tank provided outside of the housing, and connected to the first port and the second port through a heating medium pipe; and heating means provided outside of the housing to heat the heating medium.

According to this, the heating medium path becomes a closed circuit. New heating medium does not flow into the closed circuit except when heating medium is replenished. Therefore, heating circuit included in heating medium existing in the tank and the heating medium path is limited to a constant amount.

When water including a large amount of hardness components is used as heating medium, if the heating medium is heated to high temperature, scale is deposited and accumulated in the pipe, and the pipe becomes clogged. However, as described on or above, hardness component included in heating medium existing in the tank and the heating medium path is limited to the constant amount. As a result, even in a region where hard water is used, it is possible to realize a hot water supply device which can be used for the long term.

As the heating means, it is possible to use an electric heater, a heat pump device and a combustion machine.

According to an eighth aspect of the invention, in the seventh aspect, the heat exchanger for hot water supply is placed above the tank.

According to this, an installation area of the hot water supply device can be made small. Further, since the tank and the heat exchanger for hot water supply are placed in adjacent to each other in the vertical direction, a length of the heating medium pipe which connects the tank and the heat exchanger for hot water supply to each other can be shortened. Therefore, a pressure loss when heating medium flows through the pipe can be reduced, power of the transfer means can be suppressed, and a heat radiation loss from the heating medium pipe can be reduced.

According to a ninth aspect of the invention, in the seventh or eighth aspect, the heating means is a heat pump device having a refrigerant circuit which is formed by annularly connecting, one another through a refrigerant pipe, a compressor which compresses refrigerant, a radiator in which the refrigerant and the heating medium exchange heat, expansion means for decompressing the refrigerant, and an evaporator for evaporating the refrigerant. According to this, it is possible to provide the hot water supply device having excellent energy saving performance.

It is preferable to use carbon dioxide (CO₂) as refrigerant. According to this, it is possible to heat heating medium up to higher temperature (e.g., 90°C) and global warming potential is also low as compared with a case where chlorofluorocarbons-based refrigerant is used. Therefore, it is possible to realize a hot water supply device having excellent energy saving performance capable of increasing a stored heat amount in the tank and capable of heating water efficiently as compared with the case where chlorofluorocarbons-based refrigerant is used.

Embodiments of the present invention will be described below with reference to the drawings. The invention is not limited to the embodiments.

### (First Embodiment)

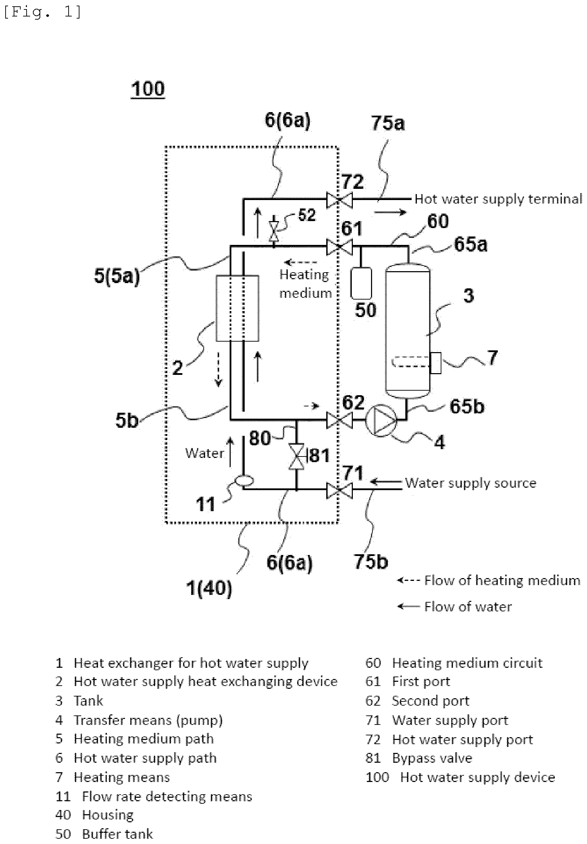

Fig. 1 is a schematic block diagram of a heat exchanger for hot water supply 1 and a hot water supply device 100 having the same according to a first embodiment.

The hot water supply device 100 includes a the heat exchanger for hot water supply 1 which heats water supplied from a water supply source by high temperature heating medium and which supplies the same to a hot water supply terminal. The hot water supply device 100 also includes a supply source which supplies high temperature heating medium to the heat exchanger for hot water supply 1. The supply source includes a tank 3 for storing high temperature heating medium therein, and heating means 7 for heating the heating medium in the tank 3. In this embodiment, an electric heater is used as the heating means 7. In this embodiment, water supplied from the water supply source is used as the heating medium.

The heat exchanger for hot water supply 1 includes a hot water supply heat exchanging device 2 which exchanges heat between high temperature heating medium supplied from the supply source and water supplied from the water supply source. Further, the heat exchanger for hot water supply 1 also includes a heating medium path 5 connected to the hot water supply heat exchanging device 2 and heating medium flows through the heating medium path 5. The heat exchanger for hot water supply 1 also includes a hot water supply path 6 connected to the hot water supply heat exchanging device 2, and water flows through the hot water supply path 6. The hot water supply heat exchanging device 2, the heating medium path 5 and the hot water supply path 6 are placed in a housing 40.

The heating medium path 5 is composed of a first heating medium pipe 5a and a second heating medium pipe 5b. One end of the heating medium path 5 is connected to a first port 61. The first heating medium pipe 5a connects the first port 61 and the hot water supply heat exchanging device 2 to each other. The other end of the heating medium path 5 is connected to a second port 62. The second heating medium pipe 5b connects the second port 62 and the hot water supply heat exchanging device 2 to each other.

The first and second ports 61 and 62 are provided in the housing 40, and connects heating medium pipes 65a and 65b placed outside of the housing 40. The heating medium pipe 65a and the first port 61 are detachably attached to each other, and the heating medium pipe 65b and the second port 62 are detachably attached to each other.

In the embodiment, the heating medium path 5 is connected to the tank 3 through the heating medium pipes 65a and 65b. The tank 3 configures a supply source of heating medium. The tank 3 and the hot water supply heat exchanging device 2 are annularly connected to each other through the heating medium path 5 and the heating medium pipes 65a and 65b, thereby forming a heating medium circuit 60. The heating medium pipe 65a connects the first port 61 and an upper portion of the tank 3 to each other. The heating medium pipe 65b connects the second port 62 and a lower portion of the tank 3 to each other.

The electric heater as the heating means 7 for heating the heating medium in the tank 3 is provided in the tank 3. Heating medium in the tank 3 is heated by the electric heater, and high temperature heating medium is produced.

The heating medium circuit 60 is provided with a pump (transfer means) 4 for flowing the heating medium to the heating medium circuit 60. In this embodiment, the transfer means 4 is provided in the heating medium pipe 65b. The transfer means 4 flows the heating medium in a direction shown broken lines in Fig. 1. That is, the heating medium flows out from the upper portion of the tank 3, flows through the heating medium pipe 65a, the first port 61, the first heating medium pipe 5a, the hot water supply heat exchanging device 2, the second heating medium pipe 5b, the second port 62, the heating medium pipe 65b and the transfer means 4 in this order, and flows into the tank 3 from the lower portion of the tank 3.

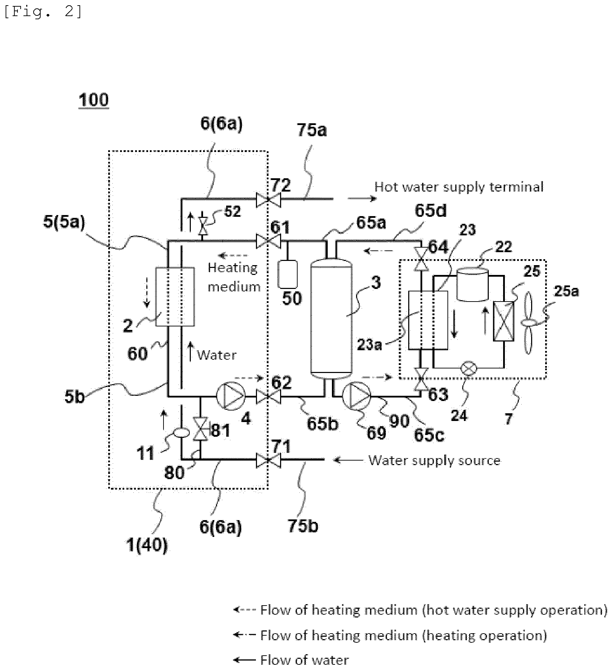

According to this, high temperature heating medium stored in the tank 3 flows through the heating medium path 5 from the first port 61 toward the second port 62. It is preferable that the transfer means 4 is provided in a relatively low temperature portion of the heating medium circuit 60, i.e., in a portion of the heating medium circuit 60 located from the hot water supply heat exchanging device 2 to the tank 3. It is preferable that the transfer means 4 is provided in the second heating medium pipe 5b as a constituent element of the heat exchanger for hot water supply 1 as shown in Fig. 2, and the transfer means 4 may be provided at any position of the heating medium path 5.

A first discharge passage 51 having a first discharge port 51a provided below the transfer means 4 is connected to the transfer means 4. The heating medium path 5 is provided with a second discharge passage 52 for discharging heating medium and air remaining in the heating medium path 5.

The heating medium circuit 60 is provided with a buffer tank 50. When temperature of heating medium is varied and volume thereof increases, heating medium of an amount corresponding to the increased volume flows into the buffer tank 50. The buffer tank 50 is provided in the heating medium pipe 65a in this embodiment. It is preferable that the buffer tank 50 is provided in a relatively high temperature portion of the heating medium circuit 60, i.e., in a portion of the heating medium circuit 60 located from the upper portion of the tank 3 to the hot water supply heat exchanging device 2. The buffer tank 50 may be provided at any position of the heating medium path 5.

The hot water supply path 6 is composed of a first water pipe 6a and a second water pipe 6b. One end of the hot water supply path 6 is connected to a water supply port 71. The first water pipe 6a connects the water supply port 71 and the hot water supply heat exchanging device 2 to each other. The other end of the hot water supply path 6 is connected to a hot water supply port 72. The second water pipe 6b connects the hot water supply port 72 and the hot water supply heat exchanging device 2 to each other. The first water pipe 6a is provided with flow rate detecting means 11 which detects a flow rate of water flowing to the hot water supply terminal. According to this, even if scale is deposited as will be described later, it is possible to precisely detect a flow rate of water flowing through the hot water supply path 6.

Water flows into the water supply port 71 from a water pipe 75b provided outside of the housing 40. Water supplied from the water supply source flows into the water pipe 75b. The water supply port 71 and the water pipe 75b are detachably attached to each other. Water flows out from the hot water supply port 72 into a water pipe 75a provided outside of the housing 40. The water pipe 75a supplies water to a hot water supply terminal such as a shower and a faucet. The hot water supply port 72 and the water pipe 75a are detachably attached to each other. According to this, water flows through the hot water supply path 6 from the water supply port 71 toward the hot water supply port 72, i.e., in a direction shown by solid lines in Fig. 1.

In the hot water supply heat exchanging device 2, heating medium and water counterflow (opposite flow). When heating medium and water flow in the same direction, a temperature difference therebetween becomes large on the inlet side of the hot water supply heat exchanging device 2, and the temperature difference therebetween becomes small on the outlet side of the hot water supply heat exchanging device 2. If heating medium and water counterflow, it is possible to constantly maintain the temperature difference between the heating medium and water over the entire region of the hot water supply heat exchanging device 2. As a result, in the hot water supply heat exchanging device 2, it is possible to enhance the heat exchanging efficiency between the heating medium and water.

The heat exchanger for hot water supply 1 includes a bypass passage 80 which connects the heating medium path 5 and the hot water supply path 6 to each other. The bypass passage 80 is provided with a bypass valve 81 for opening and closing the bypass passage 80. When an amount of heating medium existing in the heating medium circuit 60 is reduced, it is possible to easily replenish the heating medium by opening the bypass valve 81. The bypass valve 81 may be a pressure adjusting valve which automatically opens and closes when pressure reaches a predetermined value.

According to the on or above-described configuration, the heat exchanger for hot water supply 1 can be configured independently from the supply source which supplies high temperature heating medium in the tank 3. Therefore, the hot water supply device 100 can be realized by combining various supply sources. As a result, it is possible to enhance the flexibility of installation of the hot water supply device 100.

The heating medium circuit 60 which is formed by connecting the heating medium path 5 and the heating medium pipes 65a and 65b to each other becomes a closed circuit. Therefore, new water does not flow into the closed circuit except when heating medium is replenished. Hence, hardness component included in heating medium flowing through the heating medium circuit 60 is limited to a constant amount.

If water (hard water) having a large amount of hardness components is used, hardness components in the water are deposited as scale and adhere to the inside of the pipe in some cases. If the scale is accumulated on an inner surface of the pipe, the pipe eventually becomes clogged. As an element which is mainly deposited as scale among the hardness components included in water, there is calcium carbonate. The calcium carbonate is deposited as scale by reaction shown by Ca (HCO₃)₂→CO₂+H₂O+CaCO₃.

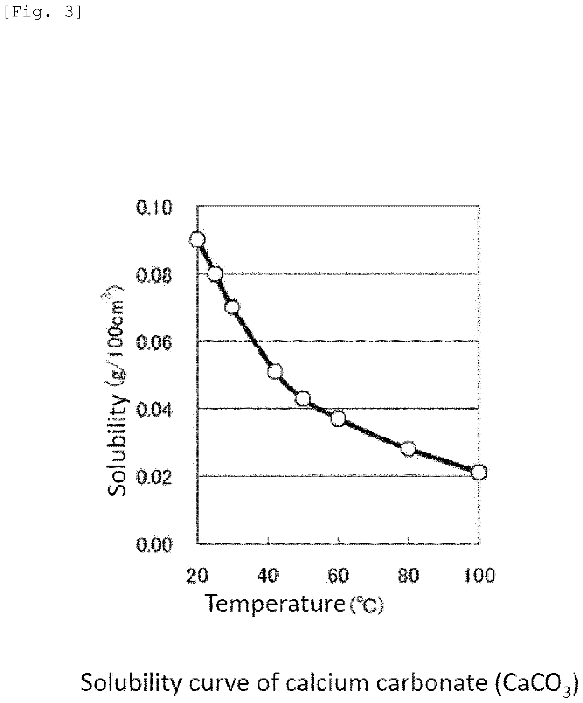

There is a tendency that solubility of calcium carbonate (CaCO₃) into water is lowered as temperature rises as shown in Fig. 3. That is, if temperature of water becomes high, calcium carbonate is deposited and is prone to be accumulated in the pipe as compared with a case where the water temperature is low. When flow of water in the pipe is distorted, the calcium carbonate is prone to be deposited as scale and adhere to the inside of the pipe.

If water (heating medium) including a large number of hardness components (especially calcium carbonate) is heated, scale is deposited and accumulated in the pipe, and the pipe becomes clogged. However, the hardness components included in the heating medium flowing through the tank 3 and the heating medium circuit 60 is limited to the constant amount as described on or above. As a result, even in a region where hard water is used, it is possible to realize the hot water supply device 100 which can be used for the long term.

When heating medium and water exchange heat, water is always supplied to the hot water supply heat exchanging device 2 from the water supply source. However, temperature of hot water produced by the hot water supply heat exchanging device 2 is about 42°C when the hot water is used for a shower, and is about 55°C if the hot water is used for washing dishes. Scale is detected frequently when water temperature rises to about 80°C. Therefore, in a temperature band of hot water produced by the hot water supply heat exchanging device 2, scale is relatively less prone to be deposited.

Although the electric heater is used as the heating means 7 which heats the heating medium in this embodiment, another means other than the electric heater may be used for heating the heating means 7. For example, a heat pump device can be used as heating means 7 as shown in Fig. 2. A hot water supply device using the heat pump device as the heating means 7 will be described below in detail.

The heat pump device is formed by annularly connecting, through refrigerant pipes, a compressor 22 for compressing refrigerant, a radiator (water-refrigerant heat exchanger) 23 for exchanging heat between heating medium and the compressed high temperature and high pressure refrigerant, expansion means 24 for decompressing refrigerant, and an evaporator 25 for evaporating refrigerant. As the evaporator 25, it is possible to use an air heat exchanger. A fan 25a for blowing air to the evaporator 25 is provided in the vicinity of the evaporator 25. It is preferable that carbon dioxide is used as refrigerant.

The tank 3 and a heating medium flow path 23a provided in the heating means 7 are connected to each other through heating medium pipes 65c and 65d. The heating medium pipe 65c connects a lower portion of the tank 3 and a third port 63 through which heating medium flows into the heating means (heat pump device) 7. The heating medium pipe 65d connects a fourth port 64 and the upper portion of the tank 3. Heating medium flows out from the heating means (heat pump device) 7 through the fourth port 64. The third port 63 and the heating medium pipe 65c are detachably attached to each other. The fourth port 64 and the heating medium pipe 65d are detachably attached to each other. The heating medium pipe 65d is provided with transfer means (pump) 69 for transferring heating medium. The heating medium flows through the lower portion of the tank 3, the transfer means 69, a water-refrigerant heat exchanger 23 and the upper portion of the tank 3 in this order.

By connecting the lower portion of the tank 3, the transfer means 69, the water-refrigerant heat exchanger 23 and the upper portion of the tank 3 to one another through the heating medium pipes 65c and 65d to form a heating circuit 90 in this manner, the heating medium can be heated by the heating means (heat pump device) 7. As compared with a case where chlorofluorocarbons-based refrigerant is used, it is possible to heat the heating medium to higher temperature (e.g., 90°C), and global warming potential is also low. Therefore, as compared with the case where chlorofluorocarbons-based refrigerant is used, it is possible to realize a hot water supply device having excellent energy saving performance capable of increasing a stored heat amount of the tank and capable of heating water efficiently.

As the heating means 7, a combustion machine may be used instead of the heat pump device for example. Although the tank 3 and the heating means 7 which heats the heating medium in the tank 3 are combined as the supply source in this embodiment, the supply source may have a configuration other than this combination. That is, the supply source may be configured only by the heating means 7 by directly connecting the heating medium pipes 65a and 65b connected to the heat exchanger for hot water supply 1 and the heating means 7 to each other without using the tank 3.

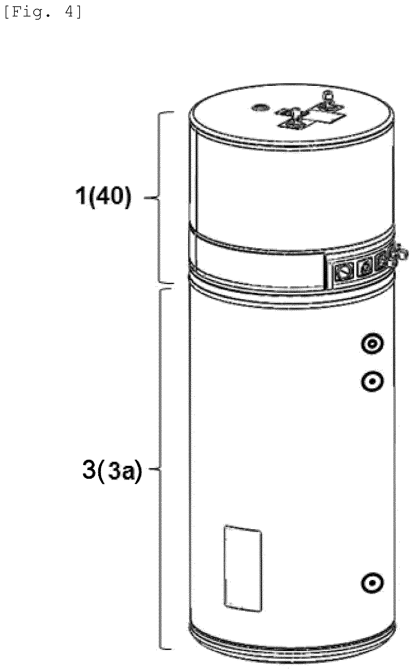

Next, a specific configuration of the hot water supply device 100 configured using the heat exchanger for hot water supply 1 will be described. As shown in Fig. 4, according to the hot water supply device 100 of this embodiment, the heat exchanger for hot water supply 1 is placed on or above the tank 3. According to this, it is possible to reduce an area required when the hot water supply device 100 is installed.

In this embodiment, a periphery of the tank 3 is covered with a heat insulator and the outside of the heat insulator is covered with the housing, thereby configuring a tank unit 3a. The heat exchanger for hot water supply 1 is placed on or above the tank unit 3a. As the heat insulator, it is possible to use urethane foam or a vacuum heat insulator for example.

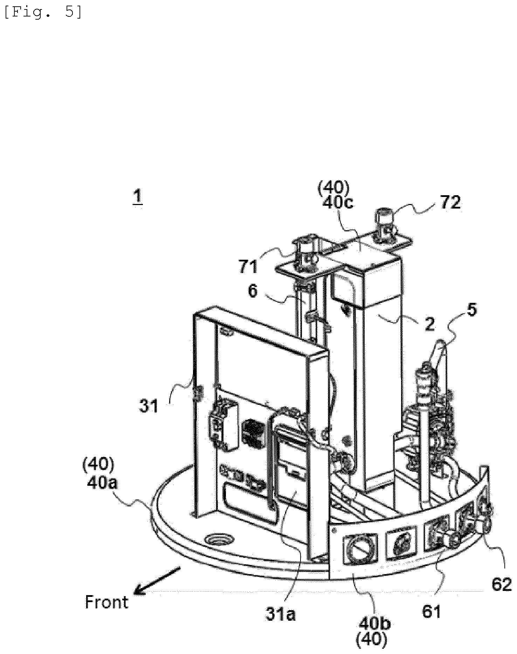

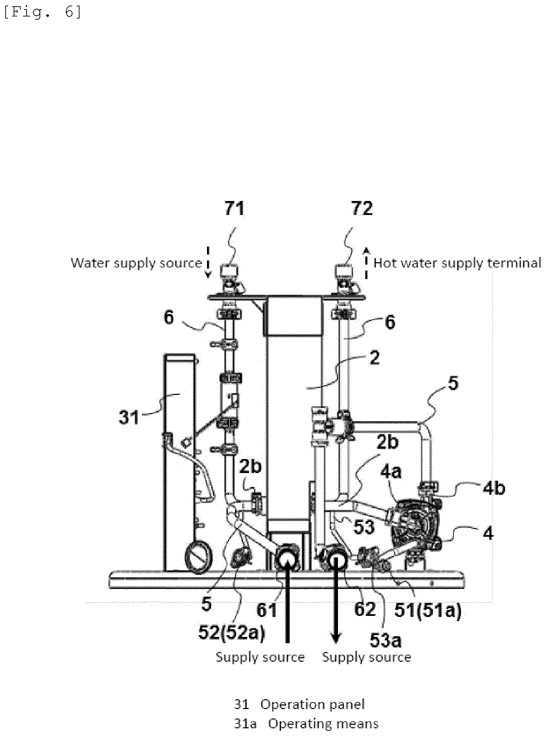

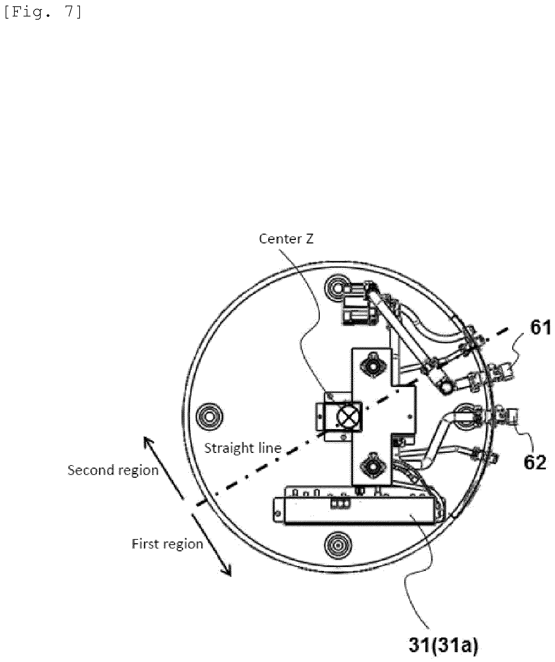

Fig. 5 is a perspective view showing an interior structure of the heat exchanger for hot water supply 1 placed on or above the tank unit 3a, Fig. 6 is a front view, and Fig. 7 is a plan view. For the description, parts of the housing 40 other than a bottom plate 40a, and a side plate 40b and an upper surface plate 40c where port 61, 62, 71 and 72 are placed are not illustrated in the drawings.

As shown in Figs. 5 and 6, the heat exchanger for hot water supply 1 includes the bottom plate 40a, the side plate 40b and the upper surface plate 40c which configure the housing 40. When the heat exchanger for hot water supply 1 is not formed into a columnar shape, the heat exchanger for hot water supply 1 may have a plurality of side plates 40b.

An operation panel 31, the hot water supply heat exchanging device 2 and the transfer means 4 are fixed to the bottom plate 40a. The first and second ports 61 and 62 are fixed to the side plate 40b. The water supply port 71 and the hot water supply port 72 are fixed to the upper surface plate 40c.

An operating means 31a having a function for adjusting temperature of water sent to the hot water supply terminal is placed on the operation panel 31. The operating means 31a is provided with a display section, and the operating means 31a is placed such that this display section is oriented to the side plate 40b.

In this embodiment, a plate-type heat exchanger is used as the hot water supply heat exchanging device 2. The hot water supply heat exchanging device 2 is provided with a heating medium inflow portion 2a through which heating medium flows in, and with a heating medium outflow portion 2b through which heating medium flows out. The first and second ports 61 and 62 are provided at positions lower than the heating medium inflow portion 2a and the heating medium outflow portion 2b. The first and second ports 61 and 62 are provided at positions lower than the transfer means 4. According to this, the heating medium inflow portion 2a, the heating medium outflow portion 2b, the transfer means 4, the first port 61 and the second port 62 are placed from above in this order in the height direction. Hence, it is possible to easily discharge heating medium existing in the heating medium path 5.

It is preferable that the first discharge passage 51 is connected to the transfer means 4. The first discharge passage 51 has the first discharge port 51a at a position lower than the transfer means 4. According to this, it is possible to easily discharge, from the first discharge port 51a, heating medium remaining in the transfer means 4. It is preferable that a suction port 4a of the transfer means 4 is provided at a position lower than a discharge port 4b of the transfer means 4. It is preferable that the heating medium path 5 connected to the discharge port 4b of the transfer means 4 is extended to a position higher than the transfer means 4 and then, the heating medium path 5 is connected to the second port 62 located at a position lower than the transfer means 4. According to this, air which flows into the heating medium path 5 can easily be discharged out by flow of heating medium. Hence, it is possible to prevent air from remaining in the transfer means 4, and to prevent the transfer means 4 from being damaged.

It is preferable that the heating medium path 5 is provided with the second discharge passage 52. The second discharge passage 52 branches off from the heating medium path 5 which is located at a position higher than the first and second ports 61 and 62, and the second discharge passage 52 is connected to the second discharge port 52a provided at a position lower than the first and second ports 61 and 62. According to this, it becomes easy to discharge heating medium remaining in the heating medium path 5. Here, it is preferable that the second discharge passage 52 is provided in the heating medium path 5 on a side opposite from the transfer means 4 on a basis of the hot water supply heat exchanging device 2.

It is preferable that the heating medium path 5 is provided with a third discharge passage 53. The third discharge passage 53 branches off from the heating medium path 5 located at a position higher than the first and second ports 61 and 62, and is connected to a third discharge port 53a provided at a position lower than the first and second ports 61 and 62. Here, it is preferable that the third discharge passage 53 is provided in the heating medium path 5 on a side where the transfer means 4 is provided on a basis of the hot water supply heat exchanging device 2. According to this, when heating medium does not flow, air moving to a high position in the heating medium path 5 can easily be discharged out through the third discharge passage 53 which branches off from the heating medium path 5 located at a position higher than the pump 4.

Next, a positional relation between the operation panel 31 (operating means 31a) and the first and second ports 61 and 62 will be described using Fig. 7. Fig. 7 is a plan view of the heat exchanger for hot water supply 1.

It is preferable that the heat exchanger for hot water supply 1 includes the operating means 31a which changes temperature of water heated by the hot water supply heat exchanging device 2. The heat exchanger for hot water supply 1 includes the first and second ports 61 and 62 so that the heat exchanger for hot water supply 1 can be provided separately from the tank 3 and the heating means 7. The heat exchanger for hot water supply 1 and the hot water supply device 100 are placed along a wall surface in many cases. Therefore, it is necessary to appropriately place the first and second ports 61 and 62 in addition to the operating means 31a, and to enhance the flexibility of installation of the heat exchanger for hot water supply 1 and the hot water supply device 100.

Here, as shown in Fig. 7, the first and second ports 61 and 62 and the operating means 31a are placed on one (first region) of regions which are divided by an arbitrary straight line passing through a center Z of the heat exchanger for hot water supply 1 as viewed from above. That is, the first and second ports 61 and 62 and the operating means 31a are placed within a range of 180° around the center Z.

According to this, the operating means 31a and the first and second ports 61 and 62 are exposed in the same direction. As a result, a connecting operation between the heat exchanger for hot water supply 1 and the heating medium pipes 65a and 65b can be made easy, and a user can easily operate the operating means 31a.

It is more preferable that the first and second ports 61 and 62 and the operating means 31a are placed within a range of 120° around the center Z. According to this, even when the hot water supply device 100 is placed indoors or at a corner of an obstruction, the connecting operation between the heat exchanger for hot water supply 1 and the heating medium pipes 65a and 65b can be made easy, and a user can easily operate the operating means 31a.

It is preferable that the operation panel 31 is provided in front of the first and second ports 61 and 62, the water supply port 71 and the hot water supply port 72. Pipes connected to the first and second ports 61 and 62 and pipes connected to the water supply port 71 and the hot water supply port 72 are not located in the same direction (same planes) as the operation panel 31, the pipes do not cross each other. As a result, when a user changes the setting of the hot water supply device 100 by the operating means 31a for example, the first and second ports 61 and 62, the water supply port 71 and the hot water supply port 72 do not hinder, and the user can easily operate.

When the water supply port 71 and the hot water supply port 72 are provided on a side surface (side plate 40b) of the housing 40, it is preferable that the operating means 31a, the first and second ports 61 and 62, the water supply port 71 and the hot water supply port 72 are placed in the same region. According to this, both the connecting operation between the port and the pipe, and the operation of the operating means 31a can be made easy.

The port and the operating means 31a provided in the one region are not provided in the same direction as view from above the housing 40. That is, it is preferable that the port and the operating means 31a are not provided in a vertical separated relation. According to this, the pipe connected to the port and the operating means 31a are not located in the same direction (same plane), and the connecting operation and the operation of the operating means 31a can be made easy.

Action and an operation of the hot water supply device 100 configured as described above will be described. The hot water supply device 100 of this embodiment can execute a heating operation for heating the heating medium to produce high temperature heating medium, and a hot water supply operation to heat water to be supplied to the hot water supply terminal to produce hot water.

A control device (not shown) executes the heating operation for heating the heating medium by the heating means 7, and storing the heating medium in the tank 3. When an electric heater provided in the tank 3 is used as the heating means 7, it is possible to heat the heating medium in the tank 3 by the electric heater. When the heat pump device is used as the heating means 7, the pump 69, the compressor 22, the fan 25a and the decompressing means 24 are operated, and heating medium is heated by refrigerant in the radiator 23. These configurations are the same also when the combustion machine is used.

The control device operates the pump 4 in the hot water supply operation, and circulates high temperature heating medium through the heating medium circuit 60. The heating medium flowing through the heating medium path 5 and water flowing through the hot water supply path 6 exchange heat in the hot water supply heat exchanging device 2. High temperature heating medium produced by the heating means 7 in the hot water supply heat exchanging device 2 and flowing through the heating medium path 5 heats water flowing through the hot water supply path 6. According to this, hot water is produced. The produced hot water flows through the hot water supply path 6, and is supplied to the hot water supply terminal.

### (Second Embodiment)

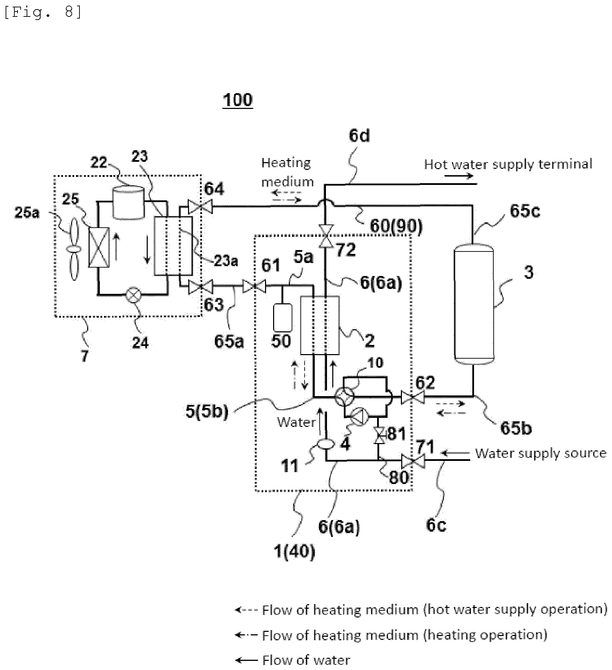

Fig. 8 is a schematic block diagram of a heat exchanger for hot water supply 1 and a hot water supply device 100 of a second embodiment. In the second embodiment, the same symbols are allocated to the same members as those of the first embodiment, and detailed descriptions thereof will be omitted.

According to the heat exchanger for hot water supply 1 of the second embodiment, the heating medium path 5 is provided with switching means 10 for switching between flowing directions of heating medium. It is preferable that the switching means 10 is provided in the second heating medium pipe 5b which forms the heating medium path 5 between a lower portion of the tank 3 and the hot water supply heat exchanging device 2. In the second embodiment, a four-way valve is used as the switching means 10. As the switching means 10, it is also possible to use a reversible pump which can transfer heating medium in a normal direction and a reverse direction.

The hot water supply device 100 of the second embodiment includes the heat exchanger for hot water supply 1, the tank 3 and the heating means 7. In the second embodiment, a heat pump device is used as the heating means 7. The heating means (heat pump device) 7 and the tank 3 configure a supply source which supplies high temperature heating medium to the heat exchanger for hot water supply 1.

In the second embodiment, the lower portion of the tank 3 and one end (second port 62) of the heating medium path 5 of the heat exchanger for hot water supply 1 are connected to each other through the heating medium pipe 65b. The other end (first port 61) of the heating medium path 5 is connected to one end (third port 63) of the heating medium flow path 23a of the heating means 7 through the heating medium pipe 65a. The other end (fourth port 64) of the heating medium flow path 23a is connected to an upper portion of the tank 3 through the heating medium pipe 65c. That is, the lower portion of the tank 3, the heating medium path 5, the heating medium flow path 23a of the heating means 7, and the upper portion of the tank 3 are annularly connected to one another through the heating medium pipes 65a to 65c, and the heating medium circuit 60 and the heating circuit 90 are formed as the same circuit. The heating medium path 5 of the heat exchanger for hot water supply 1 is provided on the heating medium circuit 60 (heating circuit 90) between the lower portion of the tank 3 and the heating means 7.

When the heating operation for producing high temperature heating medium is carried out, the heating means 7 is operated, and heating medium is circulated through the heating medium circuit 60 (heating circuit 90).

In the heating operation, heating medium flows in directions shown by chain line arrows in Fig. 8. That is, flowing directions of heating medium are switched by the switching means 10 such that heating medium which flows out from the lower portion of the tank 3 passes through the heating medium path 5 and the water-refrigerant heat exchanger 23, and returns to the upper portion of the tank 3. The heating medium which flows out from the lower portion of the tank 3 flows through the heating medium path 5, and flows into a water-refrigerant heat exchanger 23a. The heating medium which flows into the water-refrigerant heat exchanger 23 exchanges heat with high temperature and high pressure refrigerant compressed by the compressor 22, and the heating medium is heated and becomes high temperature heating medium. The heating medium which flows out from the water-refrigerant heat exchanger 23 flows through the heating medium pipe 65c and returns to the upper portion of the tank 3. According to this, the heating medium is stored in the tank 3. The high temperature heating medium is stored in the upper portion of the tank 3, and as the location in the tank 3 becomes lower, temperature of the heating medium becomes lower.

In the hot water supply operation for producing hot water to be supplied to the hot water supply terminal, heating medium flows in directions shown by dotted line arrows in Fig. 8. That is, the switching means 10 switches the flowing directions of heating medium such that high temperature heating medium which flows out from the upper portion of the tank 3 passes through the hot water supply heat exchanging device 2 of the heating medium path 5, and returns to the lower portion of the tank 3. The heating medium which flows out from the upper portion of the tank 3 flows into the hot water supply heat exchanging device 2 through the heating means (heat pump device) 7. The heating medium which flows into the hot water supply heat exchanging device 2 heats water flowing through the hot water supply path 6. According to this, hot water is produced. The heating medium which flows out from the hot water supply heat exchanging device 2 flows through the heating medium pipe 65b and returns to the lower portion of the tank 3. Hot water produced by the hot water supply heat exchanging device 2 is supplied to the hot water supply terminal through the hot water supply port 72. In the hot water supply operation, if a heat amount and temperature of the heating medium are not sufficient for heating water, the heating means 7 may be operated and hot water in the hot water supply heat exchanging device 2 may be produced while heating the heating medium.

The heat exchanger for hot water supply 1 of the second embodiment includes the switching means 10 as described above. According to this, when the heating medium path 5 is provided in the heating medium circuit 60 (heating circuit 90) between the tank 3 and the heating means 7, the switching means 10 can switch the flowing directions of heating medium which flows through the heating medium circuit 60 (heating circuit 90).

Therefore, it is possible to make fluids flowing through the heat exchangers 2 and 23a to counterflow in both the heating operation and the hot water supply operation. That is, in the heating operation, refrigerant and heating medium in the water-refrigerant heat exchanger 23 are made to counterflow by the switching means 10, and in the hot water supply operation, heating medium and water in the hot water supply heat exchanging device 2 are made to counterflow by the switching means 10. According to this, it is possible to increase the heat exchange amounts in the heat exchangers 2 and 23a in the respective operations.

### [INDUSTRIAL APPLICABILITY]

According to the present invention, as described above, means (heating device, tank and the like) which produces or supplies high temperature heating medium, and the heat exchanger for hot water supply can be provided as separated members. Hence, it is possible to combine the heat exchanger for hot water supply and the means which produces or supplies high temperature heating medium with each other, and the combined member can be applied to the hot water supply device, a hot water heating system and the like.

### [EXPLANATION OF SYMBOLS]

- 1: heat exchanger for hot water supply
- 2: hot water supply heat exchanging device
- 3: tank
- 4, 69: transfer means (pump)
- 5: heating medium path
- 6: hot water supply path
- 7: heating means
- 10: switching means
- 11: flow rate detecting means
- 40: housing
- 61: first port
- 62: second port
- 71: water supply port
- 72: hot water supply port
- 100: hot water supply device

## Claims

1. A heat exchanger for hot water supply comprising:
a hot water supply heat exchanging device in which heating medium and water supplied to a hot water supply terminal exchange heat;
a heating medium path which is connected to the hot water supply heat exchanging device and through which the heating medium flows;
a hot water supply path which is connected to the hot water supply heat exchanging device and through which water flows from a water supply source to the hot water supply terminal; and
a housing in which the hot water supply heat exchanging device, the heating medium path and the hot water supply path are accommodated, wherein
the housing is provided therein with:
a first port through which the heating medium flows into the heating medium path from outside of the housing;
a second port through which the heating medium flows from the heating medium path to outside of the housing;
a water supply port through which the water flows into the hot water supply path from outside of the housing; and
a hot water supply port through which the water flows from the hot water supply path to outside of the housing.

2. The heat exchanger for hot water supply according to claim 1, wherein the heating medium path is provided with transfer means for sending the heating medium, and
the transfer means is placed at a position higher than the first port and the second port.

3. The heat exchanger for hot water supply according to claim 1 or 2, wherein flow rate detecting means is provided in the hot water supply path on an upstream side of the hot water supply heat exchanging device.

4. The heat exchanger for hot water supply according to any one of claims 1 to 3, wherein the water supply port and the hot water supply port are placed at positions higher than the first port and the second port.

5. The heat exchanger for hot water supply according to any one of claims 1 to 4, wherein in the hot water supply heat exchanging device, a flowing direction of the heating medium and a flowing direction of the water are opposed to each other.

6. The heat exchanger for hot water supply according to any one of claims 1 to 5, further comprising operating means having a function for adjusting temperature of water sent to the hot water supply terminal, wherein
the operating means, the first port and the second port are placed in any one of two regions which are divided by a straight line passing through a center of the housing as viewed from above the housing.

7. A hot water supply device comprising:
the heat exchanger for hot water supply according to any one of claims 1 to 6;
a tank provided outside of the housing, and connected to the first port and the second port through a heating medium pipe; and
heating means provided outside of the housing to heat the heating medium.

8. The hot water supply device according to claim 7, wherein the heat exchanger for hot water supply is placed above the tank.

9. The hot water supply device according to claim 7 or 8, wherein the heating means is a heat pump device having a refrigerant circuit which is formed by annularly connecting, one another through a refrigerant pipe, a compressor which compresses refrigerant, a radiator in which the refrigerant and the heating medium exchange heat, expansion means for decompressing the refrigerant, and an evaporator for evaporating the refrigerant.
